# EUROPEAN PATENT APPLICATION

(11) **EP 4 019 590 A1**
(43) Date of publication of application: **29.06.2022**
(21) Application number: 20216593.2
(22) Date of filing: 22.12.2020
(51) Int. Cl.: C08L 71/12

(54) **THERMOPLASTIC COMPOSITIONS WITH HIGH DIELECTRIC CONSTANT, HIGH HEAT RESISTANCE AND IMPROVED MECHANICAL PROPERTIES AND THE SHAPED ARTICLE THEREFORE**

(71) Applicant: SHPP Global Technologies B.V., 4612 PX Bergen op Zoom (NL)
(72) Inventor: SONG, Shijie, Pudong, Shanghai (CN); WANG, Jian, Pudong, Shanghai (CN); DU, Yinlong, Pudong, Shanghai (CN)
(74) Representative: Dehns

(57) **Abstract**

Thermoplastic compositions include: (a) from about 10 wt. % to 60 wt. % of a first polyphenylene oxide PPO; (b) from about 0.5 wt. % to about 10 wt. % of a second PPO with low degree of polymerization and a viscosity between 0.1 dl/g and 0.3 dl/g; (c) from about 0.5 wt. % to about 10 wt. % of a general purpose polystyrene GPPS, (d) from about 0.5 wt% to about 10 wt% of an impact modifier; and (e) from about 30 wt. % to about 70 wt. % of an inorganic ceramic filler. A ratio of the first PPO and the second PPO to polystyrene is from 1:1 to 6:1. The combined weight percent value of all components does not exceed 100 wt. %, and all weight percent values are based on the total weight of the composition.

## Description

### FIELD OF THE DISCLOSURE

The present disclosure relates to materials exhibiting high dielectric constant and low dissipation factor, and in particular to polyphenylene oxide-based materials these properties for phase shift antennae applications.

### BACKGROUND

Described herein are materials useful for phase shifts of base stations. A phase shifter is a key component in a base station. Phase shifters comprise an electronic device that changes the phase of an incoming signal. A phase shifter may remotely tilt or adjust the transmission angle of antenna. Phase shifters are designed and manufactured in a number of different ways. Often, special engineering plastics with high dielectric constant dK and low dissipation factor DF properties are desirable. A polyphenyl ether such as polyphenylene oxide PPO represents a useful base resin to produce such plastics because of its excellent dielectric properties. Conventionally, PPO together with different loading of ceramic fillers have been compounded to meet different phases shifter design. However, PPO may be plagued with certain processing disadvantages.

Accordingly, there remains a need in the art for materials that exhibit high dielectric constant (DK), ultra-low dielectric loss tangent (DF), high heat resistance, easy processing and strong mechanical properties.

### SUMMARY

The above-described and other deficiencies of the art are met by thermoplastic compositions comprising (a) from about 10 wt. % to 60 wt. % of a first polyphenylene oxide PPO; (b) from about 0.5 wt. % to about 10 wt. % of a second PPO with low degree of polymerization and a viscosity between 0.1 dl/g and 0.3 dl/g; (c) from about 0.5 wt. % to about 10 wt. % of a general purpose polystyrene GPPS, (d) from about 0.5 wt% to about 10 wt% of an impact modifier; and (e) from about 30 wt. % to about 70 wt. % of an inorganic ceramic filler. A ratio of the first PPO and the second PPO to polystyrene is from 1:1 to 6:1. The combined weight percent value of all components does not exceed 100 wt. %, and all weight percent values are based on the total weight of the composition.

The above described and other features are exemplified by the following detailed description, examples, and claims.

### DETAILED DESCRIPTION OF ILLUSTRATIVE EMBODIMENTS

The present disclosure may be understood more readily by reference to the following detailed description of desired embodiments and the examples included therein. In the following specification and the claims that follow, reference will be made to a number of terms which have the following meanings.

A phase shifter is a key component in a base station. The phase shifter may include a dielectric plate. Phase shifters often comprise special engineering plastics with high dielectric constant dK and low dissipation factor DF properties. Polyphenylene oxide PPO is a useful base resin to produce such plastics because of its excellent dielectric properties. Conventionally, PPO together with different loading of ceramic fillers have been compounded to meet different phases shifter design. However, PPO may be plagued with certain processing disadvantages. PPO itself is very difficult for melt process, and is often blended with polystyrene PS to get desired a melt flowability. This blending strategy unfortunately may sacrifice the heat resistance of a final plastic composition because the glass transition temperature of PS is only 90°C. Modern phase shifter designs require a high Dk, high HDT, and high melt flowability concurrently. Traditional compositions have not met such demanding requirements.

United States Published Patent Application No. US 20180258282 discloses a composite comprising poly(arylene ether), a general purpose polystyrene, an impact modifier, and a ceramic filler exhibiting various Dk values while maintaining a low dissipation factor. These composites however do not exhibit a sufficiently high heat resistance.

Chinese Patent Application No. CN108164973A discloses a high-dielectric polyphenyl ether material comprising poly-p-phenylene oxide, shock resistant polystyrene (HIPS), a high-dielectric filling agent, an antioxidant, and a lubricant. These composites however do not exhibit a sufficiently high heat resistance as well as improved ductility and high flowability.

United States Published Patent Application No. US20090054553A1 discloses a dielectric filler and a thermoplastic polymer. Certain polyethylene ethers are not disclosed. These composites do not feature an impact modifier and do not exhibit a sufficiently high heat resistance or low dielectric loss as well as improved ductility and high flowability.

Thus although, PPO/GPPS blends are a suitable compositions with dielectric properties, the present disclosure combines a specific combination of PPO resins, GPPS, impact modifiers, and ceramic filler to optimize Dk, Df, heat resistance and ductility. Provided herein are polyphenylene oxide based-materials exhibiting high dielectric constant and low dissipation factor as well as maintained heat deflection temperature, namely, a heat deflection temperature greater than 170°C.

Also within the scope of the disclosure are articles of manufacture prepared according to any of the methods described herein. For example, articles that can be produced using the materials and methods of the disclosure include those in the electrical field, for example, computer, antenna and lighting articles.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including matters of logic with respect to arrangement of steps or operational flow; plain meaning derived from grammatical organization or punctuation; and the number or type of embodiments described in the specification.

### Thermoplastic Composition

Aspects of the disclosure relate to thermoplastic composition comprising at least a base resin comprising polyphenylene oxide (PPO) and polystyrene (PS), an impact modifier, and a ceramic filler.

In various aspects, the present disclosure provides composite materials useful for the manufacture of phase shifters that can adjust the transmission angle of antenna. These materials have been evaluated for dielectric properties, such as dielectric constant Dk and dissipation factor Df among others, at frequencies from about 1 GHZ and 120 GHz. These materials exhibit certain dielectric properties while maintaining a desirably high heat deflection temperature (that is, greater than 170 °C).

### Polyphenylene Oxide

In various aspects, the disclosed composition may comprise a polyphenylene ether such as polyphenylene oxide (a "poly(p-phenylene oxide") PPO. PPO may describe polymers containing optionally substituted phenyl rings linked with oxygen (O) and can be used interchangeably with poly(p-phenylene ether) or poly (2,6 dimethyl-p-phenylene oxide). Further, the disclosed composition may comprise a specific combination of PPO resins that provide the composition with a balance of certain properties.

According to various aspects of the present disclosure, the composition may comprise at least a first PPO and a second PPO. The first PPO may have a particular molecular weight. In further aspects, the first PPO may have a particular intrinsic viscosity. For example, the first PPO may have an intrinsic viscosity of from about 0.3 to about 0.5 deciliters per gram (dl/g). In a further example, the first PPO may comprise a PPO having a high degree of polymerization. A high degree of polymerization may be characterized by a molecular weight greater than 20,000 daltons (Da).

Certain aspects of the composition include from about 10 wt. % to about 60 wt. % of the first PPO. As provided herein, the disclosed composition also comprises a general purpose polystyrene. In some examples, the total PPO content and general purpose styrene GPPS (including polystyrene present as an impact modifier) may be present in a ratio of about 1:1 to about 5:1. In further examples, the PPO and GPPS are present in a ratio of PPO:GPPS of from 1:1 to 6:1.

The second PPO may have a particular molecular weight. In further aspects, the second PPO may have a particular intrinsic viscosity. In yet further aspects, second PPO may comprise a PPO having a low degree of polymerization. A low degree of polymerization may be characterized by a molecular weight less than 10,000 Daltons. In further examples, the second PPO may have an intrinsic viscosity of from about 0.1 to about 0.3 deciliters per gram (dl/g) or from about 0.1 dl/g to about 0.2 dl/g. The second PPO may further exhibit a glass transition temperature that is greater than that of a GPPS component as described herein. Certain aspects of the composition include from about 0.5 wt. % to about 10 wt. % of the second PPO.

### Polystyrene

In various aspects, the disclosed composition may comprise a polystyrene polymer. The term "polystyrene" as used herein includes polymers prepared by bulk, suspension and emulsion polymerization, which contain at least 25% by weight of polymer precursors having structural units derived from a monomer of the formula (I): 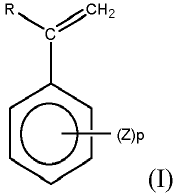 wherein R is hydrogen, lower alkyl or halogen; Z is vinyl, halogen or lower alkyl; and p is from 0 to about 5. These organic polymers include homopolymers of styrene, chlorostyrene and vinyltoluene, random copolymers of styrene with one or more monomers illustrated by acrylonitrile, butadiene, alpha -methylstyrene, ethylvinylbenzene, divinylbenzene and maleic anhydride, and rubber-modified polystyrenes including blends and grafts, wherein the rubber is a polybutadiene or a rubbery copolymer of about 98 to about 70 wt% styrene and about 2 to about 30 wt% diene monomer. Polystyrenes are generally miscible with polyphenylene ether. In certain aspects, the composition may comprise a general purpose polystyrene. The present composition may comprise from about 0.5 wt. % to about 10 wt. % of a polystyrene such as general purpose polystyrene.

As provided herein, a ratio of the first PPO and the second PPO to polystyrene is from 1:1 to 6:1, or from 1:1 to 5:1. In the ratio, polystyrene may refer to the general purpose polystyrene as well as polystyrene present in the impact modifier described elsewhere herein.

### Impact Modifier

The disclosed compositions may comprise an impact modifiers may be high molecular weight elastomeric materials derived from olefins, monovinyl aromatic monomers, acrylic and methacrylic acids and their ester derivatives, as well as conjugated dienes that are fully or partially hydrogenated. The elastomeric materials can be in the form of homopolymers or copolymers, including random, block, radial block, graft, and core-shell copolymers.

A specific type of impact modifier may be an elastomer-modified graft copolymer comprising (i) an elastomeric (i.e., rubbery) polymer substrate having a Tg less than about 10°C, less than about 0 °C, less than about -10 °C, or between about -40 °C to -80 °C, and (ii) a rigid polymer grafted to the elastomeric polymer substrate. Materials suitable for use as the elastomeric phase include, for example, conjugated diene rubbers, for example polybutadiene and polyisoprene; copolymers of a conjugated diene with less than about 50 wt % of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylene-vinyl acetate rubbers; silicone rubbers; elastomeric C₁-C₈ alkyl(meth)acrylates; elastomeric copolymers of C₁-C₈ alkyl(meth)acrylates with butadiene and/or styrene; or combinations comprising at least one of the foregoing elastomers. Materials suitable for use as the rigid phase include, for example, monovinyl aromatic monomers such as styrene and alpha-methyl styrene, and monovinylic monomers such as acrylonitrile, acrylic acid, methacrylic acid, and the C₁-C₆ esters of acrylic acid and methacrylic acid, specifically methyl methacrylate.

Specific impact modifiers include styrene-butadiene-styrene (SBS), styrene-butadiene rubber (SBR), styrene-ethylene-butadiene-styrene (SEBS), styrene ethylene propylene styrene (SEPS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN). A suitable SEBS impact modifier is high flow SEBS with a melt flow index that is greater than 3 g / 10 min at 230°C / 5 kg. In a specific example, the composition comprises a SEBS impact modifier comprising 40 percent by weight polystyrene.

Impact modifiers may be included in the present composition in the amount of 0.5 wt. % to 15 wt. % based on the total weight of the composition. For example, the impact modifier may be present in the amount of 0.5 wt. % to 12 wt. %, 0.5 wt. % to 10 wt. %, 0.5 wt. % to 8 wt.%, 1 wt. % to 15 wt. %, 2 wt. % to 15 wt. %, 2 wt. % to 10 wt. %, 2 wt. % to 8 wt. %.

### Ceramic Filler

The present compositions include a ceramic filler. Such fillers may include, for example, molybdenum sulfide MoS₂, zinc sulfide ZnS, barium titanate BaTiO₃, calcium titanate CaTiO₃, barium ferrite BaFe₁₂O₁₉, barium sulfate BaSO₄, heavy spar, titanium dioxide TiO₂, strontium titanate SrTiO₃, magnesium titanate MgTiO₃, zirconium dioxide ZrO₂, aluminum oxide Al₂O₃, or magnesium oxide MgO. In one aspect, the filler is TiO₂.

In some examples, the ceramic filler component may be present in the amount of about 40 wt. % to about 70 wt. %. In further examples, the ceramic filler may be present in an amount from 50 wt. % to about 60 wt. %, or from about 40 wt. % to 65 wt. %.

### Additives

The composition can include various additives ordinarily incorporated into polymer compositions of this type, with the proviso that the additive(s) are selected so as to not significantly adversely affect the desired properties of the thermoplastic composition (good compatibility for example). Such additives can be mixed at a suitable time during the mixing of the components for forming the composition. The total amount of all of the additives in the resin composition can be, for example, 0.001 to 12 wt% each based on the total weight of the composition.

According to certain aspects, the polymer compositions may maintain mechanical performance and dielectric strength even with high levels of fillers (for example, greater than 30 wt. % filler based on the total weight of the polymer composition).

The composite disclosed herein can comprise one or more additional fillers. The filler can be selected to impart additional impact strength and/or provide additional characteristics that can be based on the final selected characteristics of the polymer composition. In some aspects, the filler(s) can comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers. In certain aspects, the composite may comprise a glass fiber filler. In yet further aspects, the composite may be free or substantially free of a glass filler.

Appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated or surface treated, with silanes for example, to improve adhesion and dispersion with the polymer matrix. Fillers generally can be used in amounts of 1 to 200 parts by weight, based on 100 parts by weight of based on 100 parts by weight of the total composition.

The additive composition can include a flow modifier, reinforcing agent, antioxidant, heat stabilizer, light stabilizer, ultraviolet light stabilizer, ultraviolet absorbing additive, plasticizer, lubricant, release agent, antistatic agent, anti-fog agent, antimicrobial agent, chain extender, colorant, de-molding agents, flow promoter, flow modifier, surface effect additive, radiation stabilizer, flame retardant, anti-drip agent, or any combination thereof.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or combinations comprising at least one of the foregoing heat stabilizers. The heat stabilizer can be tris(2,4-di-t-butylphenyl) phosphate available as IRGAPHOS^{™} 168. Heat stabilizers are generally used in amounts of 0.01 to 5 wt%, based on the total weight of polymer in the composition.

There is considerable overlap among plasticizers, lubricants, and mold release agents, which include, for example, glycerol tristearate (GTS), phthalic acid esters (e.g., octyl-4,5-epoxy-hexahydrophthalate), tris-(octoxycarbonylethyl)isocyanurate, tristearin, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); esters, for example, fatty acid esters (e.g., alkyl stearyl esters, such as, methyl stearate, stearyl stearate, and the like), waxes (e.g., beeswax, montan wax, paraffin wax, or the like), or combinations comprising at least one of the foregoing plasticizers, lubricants, and mold release agents. These are generally used in amounts of 0.01 to 5 wt%, based on the total weight of the polymer in the composition.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4- phenylene)bis(4H-3,1-benzoxazin-4-one, commercially available under the trade name CYASORB^{™} UV-3638 from Cytec Industries Inc., Woodland, NJ), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB^{™} 5411 from Cytec Industries Inc., Woodland, NJ) or combinations comprising at least one of the foregoing light stabilizers. The UV stabilizers can be present in an amount of 0.01 to 1 wt%, specifically, 0.1 to 0.5 wt%, and more specifically, 0.15 to 0.4 wt%, based upon the total weight of polymer in the composition.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxypheny1)-propionic acid, or combinations comprising at least one of the foregoing antioxidants. Antioxidants are used in amounts of 0.01 to 0.1 parts by weight, based on 100 parts by weight of the total composition, excluding any filler.

Useful flame retardants include organic compounds that include phosphorus, bromine, and/or chlorine. Non-brominated and non-chlorinated phosphorus-containing flame retardants can be preferred in certain applications for regulatory reasons, for example organic phosphates and organic compounds containing phosphorus-nitrogen bonds.

Inorganic flame retardants can also be used, for example salts of C1-16 alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, and/or Na₃AlF₆. When present, inorganic flame retardant salts are present in amounts of 0.01 to 10 parts by weight, more specifically 0.02 to 1 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. A TSAN comprises 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Antidrip agents can be used in amounts of 0.1 to 10 parts by weight, based on 100 parts by weight of the total composition, excluding any filler.

The resin compositions can be formed by techniques known to those skilled in the art. Extrusion and mixing techniques, for example, may be utilized to combine the components of the resin composition.

The resin compositions of the present disclosure can be blended with the aforementioned ingredients by a variety of methods involving intimate admixing of the materials with any additional additives desired in the formulation. Because of the availability of melt blending equipment in commercial polymer processing facilities, melt processing methods are generally preferred. Illustrative examples of equipment used in such melt processing methods include: co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between about 230°C and about 350 °C in the molten resin composition, although higher temperatures can be used provided that the residence time of the resin in the processing equipment is kept short. In some embodiments the melt processed composition exits processing equipment such as an extruder through small exit holes in a die. The resulting strands of molten resin are cooled by passing the strands through a water bath. The cooled strands can be chopped into small pellets for packaging and further handling.

Compositions may be manufactured by various methods, including batch or continuous techniques that employ kneaders, extruders, mixers, and the like. For example, the composition can be formed as a melt blend employing a twin-screw extruder. In some embodiments at least some of the components are added sequentially. For example, the poly(arylene ether) component, the polystyrene component(s), and the impact modifier component can be added to the extruder at the feed throat or in feeding sections adjacent to the feed throat, or in feeding sections adjacent to the feed throat, while the filler component can be added to the extruder in a subsequent feeding section downstream. Alternatively, the sequential addition of the components may be accomplished through multiple extrusions. A composition may be made by preextrusion of selected components, such as the poly(arylene ether) component, the polystyrene component(s), and the impact modifier component to produce a pelletized mixture. A second extrusion can then be employed to combine the preextruded components with the remaining components. The filler component can be added as part of a masterbatch or directly. The extruder can be a two lobe or three lobe twin screw extruder.

In one aspect, the present disclosure pertains to plastic components, for example, that have been shaped, formed, or molded at least in part from the compositions described herein. Also provided are plastic components comprising a resin composition that is formed according to the presently disclosed methods for forming a resin composition.

### Properties and Articles

The disclosed compositions exhibit a balance among dielectric and physical properties. These compositions achieve a high Dk, low DF, high HDT and strong mechanical properties.

In certain aspects, the disclosed composites may exhibit certain dielectric properties. A molded article or plaque comprising the composite may exhibit a dissipation factor Df (tan delta, ε"/ε') less than 0.002 at frequencies of about 1 GHz to about 20 GHz or less than 0.003 at frequencies of about 20 GHz to about 120 GHz when measured according to a resonant cavity method. In further aspects, a molded article or plaque comprising the composite may exhibit a dielectric constant Dk greater than 5 at a frequency of 1.1 GHzwhen measured according to a resonant cavity method.

The disclosed compositions further exhibit high heat resistance, high flowability, and improved ductility. The compositions may exhibit a high heat resistance characterized by a heat deflection temperature of greater than 170°C at 0.45 MPa or greater than 160°C at 1.8 Mpa, when tested in accordance with ISO 75. The compositions may exhibit high flowability, characterized by a melt volume flow rate greater than 15 cm³/10 minutes at 320 °C and 5 kilograms (kg) when tested in accordance with ISO 1133. Further, the compositions may exhibit improved ductility which may be characterized by the observed values for tensile elongation and impact strength. For example, tensile elongation greater than 2.5% when tested in accordance with ISO 527 and notched Izod impact strength greater than 5 KJ/m².

In various aspects, the present disclosure relates to articles comprising the compositions herein. The compositions can be molded into useful shaped articles by a variety of means such as injection molding, extrusion, rotational molding, blow molding and thermoforming to form articles. The compositions can be useful in the manufacture of articles requiring materials with good flow, good impact strength, and good dielectric strength. The compositions may be useful for as well as electrically conducting purposes.

In various aspects, the present disclosure provides composite materials useful for the manufacture of phase shifters for base stations than can adjust the incident transmission angle of an antenna in a base station. These materials have been evaluated for dielectric properties, such as dissipation factor Df, among others, at frequencies from about 10 GHz and 120 GHz. The disclosed compositions may be useful as a dielectric plate for a phase shifter for a 5G base station.

The advantageous characteristics of the compositions disclosed herein make them appropriate for an array of uses.

### Methods of Manufacture

Aspects of the disclosure further relate to methods for making a thermoplastic composition. The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

Methods may further comprise processing the composite to provide a plaque of a desired thickness. Plaques can be extruded, injection molded, compression molded, or injection-compression molded, and may have a thickness between about 0.5 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composite.

Various combinations of elements of this disclosure are encompassed by this disclosure, e.g., combinations of elements from dependent claims that depend upon the same independent claim.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims, which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding aspects to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation is 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Aspects of the Disclosure

In various aspects, the present disclosure pertains to and includes at least the following aspects.
Aspect 1. A thermoplastic composition comprising: from about 10 wt. % to 60 wt. % of a first polyphenylene oxide PPO and a general purpose polystyrene GPPS; from about 0.5 wt. % to about 10 wt. % of a second PPO with low degree of polymerization and a viscosity between 0.1 dl/g and 0.3 dl/g, from about 0.5 wt% to about 10 wt% of an impact modifier; and from about 30 wt. % to about 70 wt. % of an inorganic ceramic filler, wherein a ratio of the first PPO and the second PPO to polystyrene is from 1:1 to 6:1 and, wherein the combined weight percent value of all components does not exceed 100 wt. %, and all weight percent values are based on the total weight of the composition.
Aspect 2. The thermoplastic composition according to claim 1, wherein the first PPO has a high degree of polymerization.
Aspect 3. The thermoplastic composition according to claim 1, wherein the first PPO has a molecular weight of greater than 20,000 Daltons.
Aspect 4. The thermoplastic composition according to claim 1, wherein the first PPO has a viscosity greater than 0.13 dl/g.
Aspect 5. The thermoplastic composition according to claim 1, wherein the first PPO has an intrinsic viscosity of from about 0.3 to 0.5 dl/g.
Aspect 6. The thermoplastic composition according to any one of claims 1-5, wherein the second PPO has a molecular weight less than 10,000 Daltons according to polystyrene standards.
Aspect 7. The thermoplastic composition according to any one of claims 1-6, wherein the impact modifier comprises an ethylene-propylene rubber, a maleic anhydride grafted polyethylene; a maleic anhydride functionalized copolymer, ACR (Acrylic Rubber) type of impact modifier; MBS (Methylmethacrylate-butadiene-styrene terpolymer) type of impact modifier; EGMA (Ethylene-Co-Glycidyl Methacrylate) or EMAGMA (Ethylene-methyl acrylate with glycidyl methacrylate) type of impact modifiers; SBS or SEBS type of impact modifiers; polyester ether elastomers, ethylene ethyl acrylate, or a combination thereof.
Aspect 8. The thermoplastic composition according to any of claims 1-7, wherein the impact modifier comprises a styrene-ethylene-butadiene-styrene (SEBS) having greater than 40 percent by weight of a polystyrene block copolymer.
Aspect 8B. The thermoplastic composition according to any of claims 1-7, wherein the impact modifier comprises greater than 40 percent by weight of a polystyrene block copolymer.
Aspect 9. The thermoplastic composition according to any of claims 1-8B, wherein inorganic ceramic filler comprises TiO₂, BaTiO₃, SrTiO₃, CaTiO₃, MgTiO₃, Al₂O₃, ZrO₂.
Aspect 10. The thermoplastic composition according to any of claims 1-8, wherein the inorganic ceramic filler comprises titanium dioxide.
Aspect 11. The thermoplastic composition according to any of claims 1-10, wherein the composition exhibits a dielectric constant Dk greater than 3.5 when observed at a frequency of 1.1 GHz.
Aspect 12. The thermoplastic composition according to any of claims 1-10, wherein the thermoplastic composition exhibits a dielectric loss tangent Df less than 0.0003 when observed at a frequency of 1.1 GHz.
Aspect 13. The thermoplastic composition according to any of claims 1-10, wherein the thermoplastic composition exhibits a dielectric loss tangent Df less than 0.0002 when observed at a frequency of 1.1 GHz.
Aspect 14. The thermoplastic composition according to any one of claims 1-10, wherein the thermoplastic composition exhibits a heat deflection temperature greater than 170 °C when tested in accordance with ISO 75.
Aspect 15. The thermoplastic composition according to any of claims 1-14, wherein the thermoplastic composition further comprises at least one additional additive, wherein the at least one additional additive comprises a filler, acid scavenger, anti-drip agent, antioxidant, antistatic agent, chain extender, colorant, de-molding agent, flow promoter, lubricant, mold release agent, plasticizer, quenching agent, flame retardant, UV reflecting additive, and combinations thereof.
Aspect 16. An article formed from the thermoplastic composition according to any of claims 1-15.
Aspect 17. The article according to claim 16, wherein the article is a dielectric plate for a phase shifter.
Aspect 18. A thermoplastic composition comprising: from about 10 wt. % to about 65 wt. % of polyphenylene oxide PPO; from about 0.5 wt. % to about 10 wt. % of a polystyrene, wherein a ratio of PPO to polystyrene is from about 1:1 to about 5:1; from about 0.5 wt. % to about 10 wt. % of an impact modifier; and from about 30 wt. % to about 70 wt. % of a ceramic filler, wherein the combined weight percent value of all components does not exceed 100 wt. %, and all weight percent values are based on the total weight of the composition.
Aspect 19. The thermoplastic composition of claim 18, wherein the ratio of PPO to polystyrene is from about 3:1 to about 5:1.
Aspect 20. A thermoplastic composition comprising: from about 10 wt. % to 60 wt. % of a first polyphenylene oxide PPO and polystyrene; from about 0.5 wt. % to about 10 wt. % of a second PPO with low degree of polymerization and a viscosity between 0.1 dl/g and 0.3 dl/g, from about 0.5 wt% to about 10 wt% of an impact modifier; and from about 30 wt. % to about 70 wt. % of an inorganic ceramic filler, wherein a ratio of the first PPO and the second PPO to polystyrene is from 1:1 to 6:1 and, wherein the combined weight percent value of all components does not exceed 100 wt. %, and all weight percent values are based on the total weight of the composition.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of mixing conditions, e.g., component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

Various PPO composition samples were prepared from the materials presented in Table 1.

**Table 1. Materials for compositions.**

| **Item** | **Supplier** | **Type** |
|---|---|---|
| Polyphenylene oxide 803, 0.40 dl/g intrinsic viscosity (IV) (PPO1); molecular weight greater than 20,000 Da | SABIC | Resin, PPO |
| General purpose polystyrene (GPPS) | SABIC | Resin, PS |
| Polyphenylene oxide SA120, 0.12 dl/g IV (PPO2) | SABIC | Resin, PPO |
| Titanium dioxide for polyphenylene oxide; TiO₂ coated especially for PPO | Chemours | Ceramic Filler |
| Styrene-ethylene-butadiene-styrene (SEBS) G1651 (PS block content 30-33%, Melt index (MI) 0 at 230 °C/5kg) | Kraton | Impact Modifier |
| SEBS G1652 (PS block content 29-30.8%, MI, 5 at 230 °C/5kg) | Kraton | Impact Modifier |
| SEBS A1535 (PS block content 56.3-60.3%, MI, <1 at 230 °C/5kg) | Kraton | Impact Modifier |
| SEBS A1536 (PS block content 42%, MI, 7 at 260 °C/5kg) SEBS with 60% PS block | Kraton | Impact Modifier |
| Linear low density polyethylene (LLDPE) | SABIC | Mold release |
| Phosphite stabilizer, Tris(2,4-di-t-butylphenyl)phosphite | BASF | Anti-oxidant 1 |
| Zinc sulfide (ZnS) | Sachtleben | Anti-oxidant 2 |

Compounding processes were performed on a lab extruder (Toshiba TEM-37BS). If not specifically been noted, all the base resin, impact modifier, additive and ceramic fillers were fed from the extruder throat. The compounding was run with a screw rotations at 300 RPM and 30-40 kg/h output, normally torque will be around 50-60%. The temperature profiles and molding conditions are shown in Table 2 and 3.

**Table 2. Temperature profiles for compounding.**

| **Parameters** | **Unit** | **Extrusion Condition** |
|---|---|---|
| Compounder Type | \ | TEM-37BS |
| Barrel Size | mm | 1500 |
| Die | mm | 3 |
| Feed (Zone 0) Temp | \ | 50 |
| Zone 1 Temp | °C | 150 |
| Zone 2 Temp | °C | 280 |
| Zone 3 Temp | °C | 280 |
| Zone 4 Temp | °C | 280 |
| Zone 5 Temp | °C | 280 |
| Zone 6 Temp | °C | 280 |
| Zone 7 Temp | °C | 290 |
| Zone 8 Temp | °C | 290 |
| Zone 9 Temp | °C | 290 |
| Zone 10 Temp | °C | 290 |
| Zone 11 Temp | °C | 290 |
| Die Temp | °C | 290 |

**Table 3. Injection molding conditions.**

| Molding parameters | unit | Value |
|---|---|---|
| Pre-drying time | Hour | 4 |
| Pre-drying temp | °C | 120 |
| Hopper temp | °C | 50 |
| Zone 1 temp | °C | 280 |
| Zone 2 temp | °C | 290 |
| Zone 3 temp | °C | 300 |
| Nozzle temp | °C | 300 |
| Mold temp | °C | 120-140 |

Properties of the prepared compositions were evaluated as follows. Tensile properties were measured according to ISO 527 method using the test speed of 5mm/min. Impact tests were performed according to ISO 180, under room temperature, with Pendulum Energy 5 1bf/ft. HDT was measured using method ISO 75, under stress of 0.45MPa and 1.82MPa with the part thickness of 4.0 mm. Dielectric constant (DK) and dissipation factor (DF) at fixed frequencies were tested on molded samples using a split post dielectric resonator (SPDR) and network analyzer. MVR were measured according to ISO 1133, under the loading of 5kg and 320°C

Comparative formulations C1, C2, and C3 are presented in Table 4. The compositions include only a first PPO1 (higher IV). Physical and dielectric properties of the comparative samples are also presented in Table 4. The desirable value for each testing parameter is shown under the column "SPEC." These values are attributed to materials that are useful in phase shift design. For example, a dielectric constant Dk of 5.5 at 1.1Ghz with 0.15 variance, a Df less than 0.002 at 1.1 GHz, and an HDT greater than 170°C at 0.45Mpa, while maintaining a melt volume flow rate MVR greater than 15 cm³/10 minutes.

**Table 4. Physical and dielectric properties of comparative PPO/GPPS compositions.**

| **Item Description** | | **Unit** | | **C1** | **C2** | **C3** |
|---|---|---|---|---|---|---|
| PPO1 | | % | | 33.9 | 32.9 | 31.9 |
| GPPS | | % | | 6 | 8 | 10 |
| TiO₂ for PPO | | % | | 55 | 55 | 55 |
| SEBS G1652 | | % | | 4 | 3 | 2 |
| LLDPE | | % | | 0.5 | 0.5 | 0.5 |
| Anti-oxide (Phosphite Stabilizer and ZnS) | | % | | 0.6 | 0.6 | 0.6 |
| | | | | | | |
| Total GPPS loading | | % | | 7.2 | 8.9 | 10.6 |

| **Test Item** | **Unit** | **Test Method** | **SPEC** | | | |
|---|---|---|---|---|---|---|
| HDT at 0.45Mpa | °C | ISO 75 | **>170** | 180 | 175 | 170 |
| HDT at 1.8Mpa | °C | ISO 75 | **>160** | 168 | 164 | 160 |
| Notched Izod | KJ/m² | ISO 180 | **>5** | 10.3 | 10.2 | 9.2 |
| Unnotched Izod | KJ/m² | ISO 180 | \ | 33.8 | 23.4 | 23.4 |
| Tensile Modulus | Mpa | ISO 527 | \ | 4000 | 4300 | 4600 |
| Tensile Strength | Mpa | ISO 527 | **>40** | 56 | 63 | 68 |
| Tensile Elongation | % | ISO 527 | **>2.5** | 5.3 | 4.8 | 4.5 |
| DK | 1.1 Ghz | SPDR | **5.5+-0.15** | 5.54 | 5.6 | 5.6 |
| DF | 1.1 Ghz | SPDR | **<0.002** | 0.0013 | 0.0012 | 0.0012 |
| MVR (320°C, 5kg) | cm³/10min | ISO 1133 | **>15** | 6.7 | 7 | 8.2 |

According to our previous study on the regression curve of Dk versus titanium dioxide in PPO, 55%wt titanium dioxide were calculated to meet a Dk value of 5.5. To study the balance between HDT and MVR, different loading of GPPS and SEBS were compounded and results are shown as C1, C2 and C3. The SEBS used here included about 30%wt PS block, the total GPPS content in the formula by weight is also shown in Table 4.

The results indicated that while many of the desirable values are achieved, the observed balance among HDT and MVR suggests that as the MVR values increased the HDT property declined. C3 shows that with overall GPPS loading of 10.6% by weight, the HDT has reached boundary, meaning that any additional GPPS would be too detrimental to the observed HDT (decreased below threshold of 170 °C). And, the MVR of C3 was only 8.2 cm³/10min, well below the desired value of 15 cm³/10min. Thus, the comparative samples demonstrate that decreasing the amount of GPPS improved HDT but diminished MVR.

Further samples were prepared. Table 5 shows the physical and dielectric property of PPO, PPO SA120 and GPPS based new formulation.

**Table 5. Physical and dielectric properties of PPO/SA120/GPPS resins.**

| **Item Description** | | **Unit** | | **C1** | **E1** | **E2** |
|---|---|---|---|---|---|---|
| PPO1 | | % | | 33.9 | 28.9 | 26.9 |
| PPO2 | | % | | | 5 | 7 |
| GPPS | | % | | 6 | 6 | 6 |
| TiO₂ for PPO | | % | | 55 | 55 | 55 |
| SEBS G1652 | | % | | 4 | 4 | 4 |
| LLDPE | | % | | 0.5 | 0.5 | 0.5 |
| Anti-oxide (Phosphite Stabilizer and ZnS) | | % | | 0.6 | 0.6 | 0.6 |
| Total GPPS loading | | % | | 7.2 | 7.2 | 7.2 |

| **Test Item** | **Unit** | **Test Method** | **SPEC** | | | |
|---|---|---|---|---|---|---|
| HDT at 0.45Mpa | °C | ISO 75 | **>170** | 180 | 172 | 171 |
| HDT at 1.8Mpa | °C | ISO 75 | **>160** | 168 | 162 | 160 |
| Notched Izod | KJ/m² | ISO 180 | **>5** | 10.3 | 8 | 7.5 |
| Unnotched Izod | KJ/m² | ISO 180 | \ | 33.8 | 22 | 21 |
| Tensile Modulus | Mpa | ISO 527 | \ | 4000 | 4200 | 4200 |
| Tensile Strength | Mpa | ISO 527 | **>40** | 56 | 63 | 66 |
| Tensile Elongation | % | ISO 527 | **>2.5** | 5.3 | 3.1 | 3.0 |
| DK | 1.1 Ghz | SPDR | **5.5+-0.15** | 5.54 | 5.6 | 5.6 |
| DF | 1.1 Ghz | SPDR | **<0.002** | 0.0013 | 0.0012 | 0.0012 |
| MVR (320°C, 5kg) | cm³/10min | ISO 1133 | **>15** | 6.7 | 13 | 21 |

C1 was the control sample without SA120 and E1 and E2 are example compositions with 5% and 7% SA120 by weight, respectively. With the addition of PPO2 (SA120), there forms a new balance between HDT and MVR. The sample having 5% PPO2 exhibits an almost doubled MVR while HDT is still greater than 170 °C. Further increasing SA120 to 7% by weight further improved the MVR to 21 and HDT is still maintained over 170 °C. Compared with C3 in Table 4, E2 exhibited a similar HDT level but the melt flowability increased significantly.

Various impact modifiers were also evaluated for their affect on the properties of the compositions as shown in Table 6. Table 6 also presents the ratio of total PPO to GPPS (including the polystyrene block in the impact modifier).

| | | | | | | |
|---|---|---|---|---|---|---|
| **Item Description** | | **Unit** | **E3** | **E4** | **E5** | **E6** |
| PPO1 | | % | 29.9 | 29.9 | 29.9 | 29.9 |
| PPO2 | | % | 5 | 5 | 5 | 5 |
| GPPS | | % | 6 | 6 | 6 | 6 |
| TiO₂ for PPO | | % | 55 | 55 | 55 | 55 |
| SEBS G1652 | | % | 3 | - | - | - |
| SEBS G1651 | | % | - | 3 | - | - |
| SEBS A1535 | | % | - | - | 3 | - |
| SEBS A1536 | | % | - | - | - | 3 |
| LLDPE | | % | 0.5 | 0.5 | 0.5 | 0.5 |
| Anti -oxide | | % | 0.6 | 0.6 | 0.6 | 0.6 |
| PPO1:GPPS | | | 5 | 5 | 4.85 | 4.52 |

| **Test Item** | **Unit** | **Test Method** | | | | |
|---|---|---|---|---|---|---|
| HDT at 0.45Mpa | °C | ISO 75 | 175 | 174 | 174 | 174 |
| HDT at 1.8Mpa | °C | ISO 75 | 163 | 164 | 163 | 163 |
| Notched Izod | KJ/m2 | ISO 180 | 7.1 | 6.9 | 6.5 | 7.6 |
| Unnotched Izod | KJ/m2 | ISO 180 | 45 | 39.8 | 35.9 | 38.3 |
| Tensile Modulus | Mpa | ISO 527 | 4235 | 4535 | 4592 | 4446 |
| Tensile Strength | Mpa | ISO 527 | 67 | 64 | 70.5 | 67.4 |
| Tensile Elongation | % | ISO 527 | 2.9 | 2 | 3.2 | 3.25 |
| DK | 1.1 Ghz | SPDR | 5.55 | 5.64 | 5.65 | 5.64 |
| DF | 1.1 Ghz | SPDR | 0.0016 | 0.0016 | 0.0016 | 0.0017 |
| MVR (320°C, 5kg) | cm³/10min | ISO 1133 | 11.3 | 9.2 | 10 | 11 |

By comparing G type and A type SEBS in Table 6, type A SEBS achieved a higher ductility than type G as evidenced by the higher tensile elongation rate. Other properties were essentially consistent for type G and type A type. Thus type A SEBS was more effective to improve the ductility in high Dk PPO compounds.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A thermoplastic composition comprising:
a. from about 10 wt. % to 60 wt. % of a first polyphenylene oxide (PPO);
b. from about 0.5 wt. % to about 10 wt. % of a second PPO with low degree of polymerization and a viscosity between 0.1 dl/g and 0.3 dl/g;
c. from about 0.5 wt. % to about 10 wt. % of a general purpose polystyrene (GPPS)
d. from about 0.5 wt% to about 10 wt% of an impact modifier; and
e. from about 30 wt. % to about 70 wt. % of an inorganic ceramic filler,
wherein a ratio of the first PPO and the second PPO to polystyrene is from 1:1 to 6:1, and wherein the combined weight percent value of all components does not exceed 100 wt. %, and all weight percent values are based on the total weight of the composition.

2. The thermoplastic composition according to claim 1, wherein the first PPO has a high degree of polymerization and viscosity greater than 0.13 dl/g.

3. The thermoplastic composition according to claim 1 or 2, wherein the second PPO has a molecular weight less than 10,000 Daltons according to polystyrene standards.

4. The thermoplastic composition according to any of claims 1-3, wherein the impact modifier comprises: an ethylene-propylene rubber; a maleic anhydride grafted polyethylene; a maleic anhydride functionalized copolymer; acrylic rubber (ACR); methylmethacrylate-butadiene-styrene terpolymer (MBS); ethylene-co-glycidyl methacrylate (EGMA); ethylene-methyl acrylate with glycidyl methacrylate (EMAGMA); styrene-butadiene-styrene (SBS); styrene-ethylene-butadiene-styrene (SEBS); a polyester ether elastomer; ethylene ethyl acrylate; or a combination thereof.

5. The thermoplastic composition according to any of claims 1-4, wherein the impact modifier comprises a styrene-ethylene-butadiene-styrene (SEBS) having greater than 40 percent by weight of a polystyrene block copolymer.

6. The thermoplastic composition according to any of claims 1 to 5, wherein the inorganic ceramic filler comprises TiO₂, BaTiO₃, SrTiO₃, CaTiO₃, MgTiO₃, Al₂O₃, ZrO₂, or a combination thereof.

7. The thermoplastic composition according to any of claims 1 to 5, wherein the inorganic ceramic filler comprises titanium dioxide.

8. The thermoplastic composition according to any of claims 1 to 7, wherein the thermoplastic composition exhibits a dielectric constant Dk greater than 3.5 when observed at a frequency of 1.1 GHz.

9. The thermoplastic composition according to any of claims 1 to 8, wherein the thermoplastic composition exhibits a dielectric loss tangent Df less than 0.0003 when observed at a frequency of 1.1 GHz.

10. The thermoplastic composition according to any of claims 1 to 8, wherein the thermoplastic composition exhibits a dielectric loss tangent Df less than 0.0002 when observed at a frequency of 1.1 GHz.

11. The thermoplastic composition according to any one of claims 1 to 10, wherein the thermoplastic composition exhibits a heat deflection temperature greater than 170 °C when tested in accordance with ISO 75.

12. The thermoplastic composition according to any of claims 1 to 11, wherein the thermoplastic composition further comprises at least one additional additive, wherein the at least one additional additive comprises a filler, acid scavenger, anti-drip agent, antioxidant, antistatic agent, chain extender, colorant, de-molding agent, flow promoter, lubricant, mold release agent, plasticizer, quenching agent, flame retardant, UV reflecting additive, or combinations thereof.

13. An article formed from the thermoplastic composition according to any of claims 1 to 12.

14. The article according to claim 13, wherein the article is a dielectric plate for a phase shifter.

15. A thermoplastic composition comprising:
a. From about 10 wt. % to about 65 wt. % of polyphenylene oxide PPO;
b. From about 0.5 wt. % to about 10 wt. % of a polystyrene, wherein a ratio of PPO to polystyrene is from about 1:1 to about 5:1;
c. From about 0.5 wt. % to about 10 wt. % of an impact modifier; and
d. From about 30 wt. % to about 70 wt. % of a ceramic filler,
wherein the combined weight percent value of all components does not exceed 100 wt. %, and all weight percent values are based on the total weight of the composition.
